(19)

Europäisches
Patentamt

European
Patent Office

Office européen
des brevets

(11) **EP 2 938 008 B1**

(12) **EUROPEAN PATENT SPECIFICATION**

(45) Date of publication and mention
of the grant of the patent:
**14.06.2017 Bulletin 2017/24**

(21) Application number: **13872424.0**

(22) Date of filing: **25.01.2013**

(51) Int Cl.:
*H04B 7/06* *(2006.01)*          *H04W 88/08* *(2009.01)*
*H04W 92/10* *(2009.01)*          *H04B 7/08* *(2006.01)*

(86) International application number:
**PCT/CN2013/070994**

(87) International publication number:
**WO 2014/113974 (31.07.2014 Gazette 2014/31)**

(54) **WAVE BEAM SELECTION METHOD AND BASE STATION**

WELLENSTRAHLENAUSWAHLVERFAHREN UND BASISSTATION

PROCÉDÉ DE SÉLECTION DE FAISCEAU D'ONDES ET STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.10.2015 Bulletin 2015/44**

(73) Proprietor: **Huawei Technologies Co., Ltd.
Longgang District
Shenzhen, Guangdong 518129 (CN)**

(72) Inventors:
• **YAO, Hongmei
Shenzhen
Guangdong 518129 (CN)**

• **LUO, Xiaojun
Shenzhen
Guangdong 518129 (CN)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
**EP-A1- 1 359 684          EP-A1- 1 492 252
WO-A2-03/096710          CN-A- 1 381 999
CN-A- 1 396 785          CN-A- 1 496 615
CN-A- 1 921 324          US-A1- 2002 137 538
US-B1- 6 584 302**

EP 2 938 008 B1

**Description**

**TECHNICAL FIELD**

The present invention relates to the field of communications, and in particular, to a beam selection method and a base station.

**BACKGROUND**

As wireless communications operators are increasingly keen to introduce a new carrier, a multi-antenna technology and the like and antenna space constraints are presenting an urgent concern, use of an active antenna system (Active Antenna System, AAS) in the field of wireless communications becomes a hot topic of research. After an AAS is deployed, the foregoing concerns of the operators can be addressed. Compared with a traditional antenna, the AAS exhibits advantages in networking flexibility, environment protection, system capacity, coverage, and the like.

In an AAS-capable system, multi-sector networking may be accomplished in a downlink direction, so that more sectors may be formed by means of beam splitting and system capacity is thereby improved. For example, by splitting a wide beam into two narrow beams, traditional three-sector networking is evolved into six-sector networking. In multi-sector networking, for example, in the foregoing six-sector networking, a user equipment (User Equipment, UE) may be located in a beam overlapping area, or may not be located in a beam overlapping area. In this case, a base station needs to select a downlink transmit beam for the UE, in other words, to select a beam in a particular sector for sending a signal to the UE. However, no corresponding mechanism is now available to deal with this issue.

EP 1 492 252 A1 discloses a multi-beam antenna transmitter/receiver and a transmitting/receiving method. The multi-beam antenna transmitter/receiver includes reception beam calculation units which calculate overall reception qualities from the reception qualities of path delays of user signals for respective reception beams. A transmission beam is selected in a multipath environment.

WO 03/096710 A2 discloses a resource location to users in slotted code division code multiplexing access system using beams. In one approach, a steering vector takes advantage of general reciprocity. Wait factors for uplink beam forming are used to steer the downlink transmission. The same weights are used for the uplink and the downlink transmission.

**SUMMARY**

The present invention provide a beam selection method of claim 1 and a base station according to claim 9, which can implement selection of a downlink transmit beam in an AS-capable system.

According to a first aspect, a beam selection method is provided, including: separately acquiring multipath information of each receive port of M receive ports of a base station, where the multipath information is used to indicate at least one path corresponding to each receive port, and M is a positive integer; performing multipath matching between the M receive ports according to the multipath information to determine i groups of matching paths, where i is a positive integer; separately determining at least one equivalent signals at N transmit ports of the base station according to uplink signals on the i groups of matching paths, where N is a positive integer; and determining, according to energy of the equivalent signals at the N transmit ports, a downlink transmit beam used for sending a signal to a user equipment.

With reference to the first aspect, in a first possible implementation, the multipath information includes a port number of a receive port at which each path of the at least one path is, a path number of each path, and a delay of each path.

With reference to the first possible implementation of the first aspect, in a second possible implementation, the performing multipath matching between the M receive ports according to the multipath information to determine i groups of matching paths includes: performing multipath matching between the M receive ports to determine the i groups of matching paths, so that each group of matching paths among the i groups of matching paths includes M paths, a delay difference between the $h^{th}$ path and each path of the M paths except the $h^{th}$ path is less than or equal to a preset delay threshold, and the M paths are in a one-to-one correspondence with the M receive ports, where h is a positive integer, and $1 \leq h \leq M$.

According to the first aspect the separately determining at least one equivalent signals at N transmit ports according to uplink signals of the i groups of matching paths includes: selecting j groups of matching paths from the i groups of matching paths according to energy on the i groups of matching paths, where j is a positive integer, and $1 \leq j \leq i$; and separately determining the equivalent signals at the N transmit ports according to at least one uplink signal on the j groups of matching paths.

According to the first aspect, the selecting j groups of matching paths from the i groups of matching paths according to energy on the i groups of matching paths includes: sequencing the i groups of matching paths in descending order according to the energy on the i groups of matching paths; and selecting the first j groups of matching paths from the i groups of matching paths that are sequenced.

With reference to any possible implementation of the first aspect, in a third possible implementation, the separately determining the equivalent signals at the N transmit ports according to at least one uplink signal on the j groups of matching paths includes: separately performing weighted processing on the uplink signals of the j groups of matching paths to separately determine j equivalent signals at each transmit port of the N transmit ports.

According to the first aspect, the separately performing weighted processing on the uplink signals of the j groups of matching paths to separately determine j equivalent signals at each transmit port of the N transmit ports includes:

for the $k^{th}$ group of matching paths among the j groups of matching paths, performing weighted processing on at least one uplink signals of the $k^{th}$ group of matching paths according to the following equation, so as to determine the $k^{th}$ equivalent signal $z_{nk}$ at the $n^{th}$ transmit port of the N transmit ports:

$$z_{n,k} = \sum_{m=1}^{M} w_{n,m} y_{k,m}, \quad n = 1, \ldots, N \quad k = 1, \ldots, j$$

where $W_{n,m}$ is an uplink active antenna system AAS antenna weight value corresponding to the $n^{th}$ transmit port and the $m^{th}$ receive port, and $y_{km}$ is an uplink signal of the $m^{th}$ path in the $k^{th}$ group of matching paths.

With reference to any possible implementation of the first aspect, in a forth possible implementation, the determining, according to energy of the equivalent signals at the N transmit ports, a downlink transmit beam used for sending a signal to a user equipment includes: performing energy estimation on an equivalent signal at each transmit port of the N transmit ports to determine a beam energy estimation value of each transmit port; performing noise reduction processing on the beam energy estimation value of each transmit port to determine a beam energy value of each transmit port; determining, according to the beam energy value of each transmit port, whether the user equipment is located in a beam overlapping area; and in a case in which it is determined that the user equipment is located in the beam overlapping area, combining multiple beams corresponding to the beam overlapping area as the downlink transmit beam; or in a case in which it is determined that the user equipment is not located in the beam overlapping area, using a beam at a transmit port corresponding to a largest beam energy value as the downlink transmit beam.

With reference to the forth possible implementation of the first aspect, in a fifth possible implementation, the performing energy estimation on an equivalent signal at each transmit port of the N transmit ports to determine a beam energy estimation value of each transmit port includes: separately performing energy estimation on the j equivalent signals at each transmit port to separately determine j signal energy estimation values of each transmit port; and using the sum of the j signal energy estimation values of each transmit port as the beam energy estimation value of each transmit port.

With reference to the forth possible implementation of the first aspect or the fifth possible implementation of the first aspect, in a sixth possible implementation, the determining, according to the beam energy value of each transmit port, whether the user equipment is located in a beam overlapping area includes: for the $r^{th}$ transmit port and $s^{th}$ transmit port that are spatially adjacent and among the N transmit ports, determining whether a difference between a beam energy value of the $r^{th}$ transmit port and a beam energy value of the $s^{th}$ transmit port is less than or equal to a preset beam energy threshold, so as to determine whether the user equipment is located in an overlapping area between a beam at the $r^{th}$ transmit port and a beam at the $s^{th}$ transmit port.

With reference to the first aspect or any implementation of the first aspect, in a seventh possible implementation, the uplink signal is a channel estimation factor.

According to a second aspect, a base station is provided, including: an acquiring unit, configured to separately acquire multipath information of each receive port among M receive ports of the base station, where the multipath information is used to indicate at least one path corresponding to each receive port, and M is a positive integer; a matching unit, configured to perform multipath matching between the M receive ports according to the multipath information to determine i groups of matching paths, where i is a positive integer; and a determining unit, configured to separately determine at least one equivalent signals at N transmit ports of the base station according to uplink signals on the i groups of matching paths, where N is a positive integer; where the determining unit is further configured to determine, according to energy of the equivalent signals at the N transmit ports, a downlink transmit beam used for sending a signal to a user equipment.

With reference to the second aspect, in a first possible implementation, the multipath information includes a port number of a receive port at which each path is, a path number of each path, and a delay of each path.

With reference to the first possible implementation of the second aspect, in a second possible implementation, the matching unit is specifically configured to perform multipath matching between the M receive ports to determine the i groups of matching paths, so that each group of matching paths among the i groups of matching paths includes M paths, a delay difference between the hth path and each path of the M paths except the hth path is less than or equal to a preset delay threshold, and the M paths are in a one-to-one correspondence with the M receive ports, where h is a positive integer, and $1 \leq h \leq M$.

According to the second aspect, , the determining unit is specifically configured to select j groups of matching paths from the i groups of matching paths according to energy on the i groups of matching paths, where j is a positive integer, and $1 \leq j \leq i$; and separately determine the equivalent signals at the N transmit ports according to uplink signals on the j groups of matching paths.

With reference to any possible implementation of the second aspect, in a third possible implementation, the determining unit is specifically configured to sequence the i groups of matching paths in descending order according to the energy on the i groups of matching paths; and select the first j groups of matching paths from the i groups of matching paths that are sequenced.

According to the second aspect the determining unit is specifically configured to separately perform weighted processing on the uplink signals of the j groups of matching paths to separately determine j equivalent signals at each transmit port of the N transmit ports.

According to the second aspect, the determining unit is specifically configured to: for the kth group of matching paths among the j groups of matching paths, perform weighted processing on at least one uplink signals of the kth group of matching paths according to the following equation, so as to determine the kth equivalent signal $z_{nk}$ at the nth transmit port of the N transmit ports:

$$z_{n,k} = \sum_{m=1}^{M} w_{n,m} y_{k,m} , \quad n = 1, \ldots, N \quad k = 1, \ldots, j$$

where $W_{n,m}$ is an uplink active antenna system AAS antenna weight value corresponding to the nth transmit port and the mth receive port, and $y_{km}$ is an uplink signal of the mth path in the kth group of matching paths.

With reference to any possible implementation of the second aspect, in a forth possible implementation, the determining unit is specifically configured to: perform energy estimation on an equivalent signal at each transmit port of the N transmit ports to determine a beam energy estimation value of each transmit port; perform noise reduction processing on the beam energy estimation value of each transmit port to determine a beam energy value of each transmit port; determine, according to the beam energy value of each transmit port, whether the user equipment is located in a beam overlapping area; and in a case in which it is determined that the user equipment is located in the beam overlapping area, combine multiple beams corresponding to the beam overlapping area as the downlink transmit beam; or in a case in which it is determined that the user equipment is not located in the beam overlapping area, use a beam at a transmit port corresponding to a largest beam energy value as the downlink transmit beam.

With reference to the forth possible implementation of the second aspect, in an fifth possible implementation, the determining unit is specifically configured to: separately perform energy estimation on the j equivalent signals at each transmit port to separately determine j signal energy estimation values of each transmit port; and use the sum of the j signal energy estimation values of each transmit port as a beam energy estimation value of each transmit port.

With reference to the forth possible implementation of the second aspect or the fifth possible implementation of the second aspect, in a sixth possible implementation, the determining unit is specifically configured to: for the rth transmit port and sth transmit port that are spatially-adjacent and among the N transmit ports, determine whether a difference between a beam energy value of the rth transmit port and a beam energy value of the sth transmit port is less than or equal to a preset beam energy threshold, so as to determine whether the user equipment is located in an overlapping area between a beam at the rth transmit port and a beam at the sth transmit port.

With reference to the second aspect or any implementation manner of the second aspect, in a seventh possible implementation, the uplink signal is a channel estimation factor.

In the embodiments of the present invention, equivalent signals at transmit ports are determined according to uplink signals of matching paths between receive ports, and a downlink transmit beam is determined according to energy of the equivalent signals at the transmit ports, so that selection of a downlink transmit beam can be implemented in an AAS-capable system.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

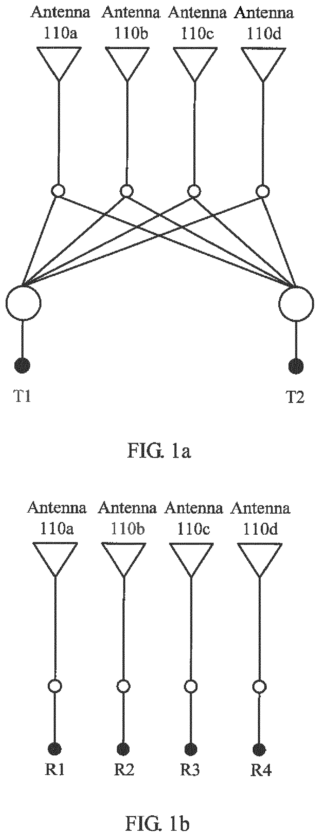

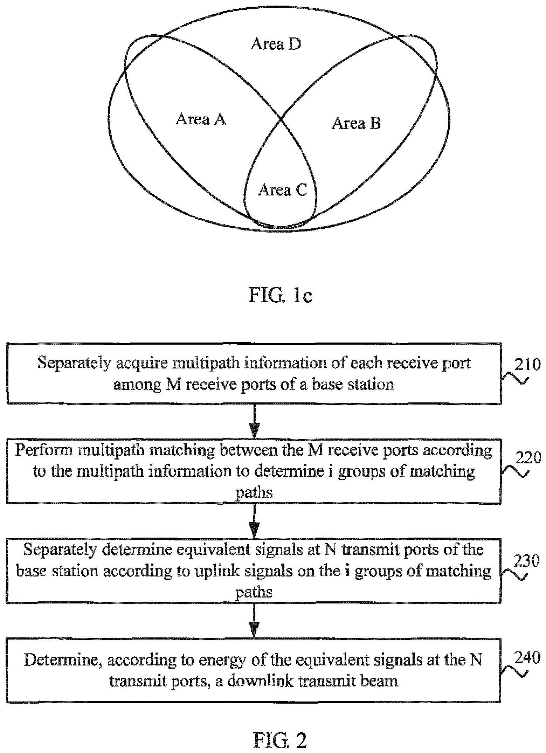

FIG. 1 a is a schematic diagram depicting an example of a transmit port according to an embodiment of the present invention;

FIG 1b is a schematic diagram depicting an example of a receive port according to an embodiment of the present invention;

FIG. 1 c is a schematic diagram depicting an example of a beam coverage area according to an embodiment of the present invention;

FIG. 2 is a schematic flowchart of a beam selection method according to an embodiment of the present invention;

FIG. 3 is a schematic block diagram of a base station according to an embodiment of the present invention; and

FIG. 4 is a schematic block diagram of a base station according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Technical solutions of the present invention may be applied to various communications systems that employ an AAS, such as a Wideband Code Division Multiple Access (Wideband Code Division Multiple Access, WCDMA), a Global System for Mobile Communications (Global System for Mobile Communications, GSM), a Code Division Multiple Access (Code Division Multiple Access, CDMA) system, and a general packet radio service (GPRS, General Packet Radio Service) system.

FIG 1a, FIG. 1b, and FIG. 1c are schematic diagrams depicting examples scenarios in which the embodiments of the present invention may be applied.

FIG. 1a is a schematic diagram depicting an example of a transmit port according to an embodiment of the present invention.

As shown in FIG 1a, it is assumed that each sector of a base station has four antennas, namely, an antenna 110a to an antenna 11 Od. A beam of each antenna may be a wide beam. In a downlink direction, beam splitting may be performed on the wide beam of each of the antenna 110a to the antenna 110d to form two narrow beams, and two transmit ports, namely, transmit ports T1 and T2, are thereby formed. In other words, beamforming (beamforming) may be performed on a wide beam of an antenna in each sector of the base station to obtain two narrow beams, thereby forming six virtual sectors in three sectors of the base station.

FIG. 1b is a schematic diagram depicting an example of a receive port according to an embodiment of the present invention.

In FIG. 1b, the four antennas shown in FIG. 1a are still used as an example for description. As shown in FIG. 1b, in an uplink direction, beam splitting may not be performed on the wide beam of each of the antenna 110a to the antenna 110d, and consequently four receive ports are formed, namely, receive ports R1, R2, R3, and R4.

It should be understood that, for ease of description, each sector of a base station is shown in FIG. 1a as having four antennas, but in the embodiments of the present invention, there may be more or fewer antennas, and consequently more or less narrow beams may be formed as a result of beam splitting on wide beams of these antennas, which means that more or fewer transmit ports are formed. However, in the case of multi-sector networking, a quantity of narrow beams is typically greater than or equal to 2. Correspondingly, there may be more or fewer receive ports.

It can be seen that, in the scenarios shown in FIG. 1a and FIG. 1b, beams in the downlink direction and beams in the uplink direction are asymmetric. That is to say, the base station sends a signal by using a narrow beam in the downlink direction and receives a signal by using a wide beam in the uplink direction.

FIG. 1c is a schematic diagram depicting an example of a beam coverage area according to an embodiment of the present invention.

In FIG. 1c, description is cast with reference to the scenarios shown in FIG 1a and FIG. 1b. As shown in FIG. 1c, by way of example, an area A may represent a coverage area of a beam on the transmit port T1 in FIG 1a, an area B may represent a coverage area of a beam on the transmit port T2 in FIG. 1 a, an area C may represent an overlapping area between the beam on the transmit port T1 and the beam on the transmit port T2, and an area D enclosed by an outer circle may represent a beam coverage area in the uplink direction. That is to say, the base station sends a signal by using a narrow beam in the downlink direction and receives a signal by using a wide beam in the uplink direction.

In this case, after entering a coverage of the base station, a UE may be located in the area A, or may be located in the area B, or may be located in the area C. The base station needs to determine an area in which the UE is located, so that the base station is able to select a downlink transmit beam used for sending a signal to the UE.

It should also be understood that, although the scenarios shown in FIG. 1a to FIG. 1c are scenarios in which an uplink beam and a downlink beam are asymmetric, the embodiments of the present invention may also be applied to a scenario in which an uplink beam and a downlink beam are symmetric.

FIG. 2 is a schematic flowchart of a beam selection method according to an embodiment of the present invention. The method in FIG. 2 is executed by a base station. For example, the base station may be a base station in a communications system using an AAS. For example, the base station may be a base station (Base Transceiver Station, BTS) in GSM or CDMA, or may be a base station (NodeB) in WCDMA, which is not limited in the embodiments of the present invention.

210: Separately acquire multipath information of each receive port among M receive ports of a base station, where the multipath information is used to indicate at least one path (namely, a transmission path) corresponding to each receive port, and M is a positive integer.

For example, the base station may perform a multipath search on the M receive ports to acquire the multipath information of each receive port. One path among the at least one path may be a group of spatial transmission paths that are indistinguishable in delay. In other words, a group of spatial transmission paths that are indistinguishable in delay are identified by the base station as one path.

220: Perform multipath matching between the M receive ports according to the multipath information to determine i groups of matching paths, where i is a positive integer.

For example, by means of multipath matching, one transmission path that meets a multipath delay requirement can be selected for each receive port, and M transmission paths that meet the multipath delay requirement and are of the M receive ports are identified as a group of matching paths. For example, M transmission paths that meet a multipath delay difference requirement are identified as a group of matching paths at the M receive ports.

230: Separately determine at least one equivalent signals at N transmit ports of the base station according to at least one uplink signal on the i groups of matching paths, where N is a positive integer.

For example, the foregoing uplink signals may be any uplink signal sent by a user equipment to the base station.

For example, a weighted operation may be performed, according to reciprocity between uplink transmission and downlink transmission, on uplink signals received by the base station to obtain downlink equivalent signals.

240: Determine, according to energy of the equivalent signals at the N transmit ports, a downlink transmit beam.

For example, a determination of whether a UE is located in a beam overlapping area is performed according to energy values of beams of the downlink equivalent signal, and a corresponding beam is selected as the downlink transmit beam according to a result of the determining. Specifically, in a case in which the UE is located in the beam overlapping area, multiple beams corresponding to the beam overlapping area are combined as the downlink transmit beam; or in a case in which it is determined that the UE is not located in the beam overlapping area, a beam at a transmit port corresponding to a largest beam energy value is used as the downlink transmit beam.

In this embodiment of the present invention, equivalent signals at transmit ports are determined according to uplink signals of matching paths at receive ports, and a downlink transmit beam is determined according to energy of the equivalent signals at the transmit ports, so that selection of a downlink transmit beam can be implemented in an AAS-capable system.

Optionally, in one embodiment, the multipath information may include a port number of a receive port at which each path of the at least one path is, a path number of each path, and a delay of each path.

For example, multipath information of a receive port may include related information of each path corresponding to the receive port, and a format of the multipath information may be [receive port number, path number, delay].

Optionally, in another embodiment, in step 220, the base station may perform multipath matching between the M receive ports to determine i groups of matching paths, so that each goup of matching paths among the i groups of matching paths includes M paths, a delay difference between the $h^{th}$ path and each path of the M paths except the $h^{th}$ path is less than or equal to a preset delay threshold, and the M paths are in a one-to-one correspondence with the M receive ports, where h is a positive integer, and $1 \leq h \leq M$.

For example, the base station may separately select one path from paths corresponding to each receive port, and organize the paths into a group of paths. In the group of paths, the $h^{th}$ path may be selected as a reference path, and a delay difference between the $h^{th}$ path and any other path in the group of paths is less than or equal to a preset delay threshold. In which case, the group of paths may form a group of matching paths. The base station may determine one or more groups of such matching paths, and a quantity of paths included in each group of matching paths is the same as a quantity of receive ports. In other words, each group of matching paths may include M paths, and the M paths are in a one-to-one correspondence with the M receive ports.

The following describes a process of step 220 with reference to a specific example. It should be understood that, this example is for the purpose of helping a person skilled in the prior art better understand this embodiment of the present invention, and is not intended to limit the scope of this embodiment of the present invention. The example of determining a matching path is as follows:

(1) Select a reference path. For example, the first path at the first receive port may be used as a reference path.
(2) Select one path from paths corresponding to the second receive port, where a delay difference between the path and the reference path is less than or equal to a preset delay threshold; select one path from paths corresponding to the third receive port, where a delay difference between the path and the reference path is less than or equal to the preset delay threshold, ..., and after selection is completed at the second receive port to the $M^{th}$ receive port, the group of selected paths forms a group of matching paths. If a receive port has more than one path whose delay difference from the reference path meets a requirement, a path having a smallest delay difference is selected. If no path at a receive port meets the delay difference requirement, it is determined that there is no matching path for this reference path.

(3) Select a next reference path such as the second path at the first port, and execute step (2), until all the paths of the first port are used as a reference path and have undergone matching processing. One or several groups of matching paths that have been selected should be excluded in the process of selecting a group of matching paths for a next reference path.

For example, there are two receive ports, namely, receive port 1 and receive port 2. Each receive port may correspond to two paths, so that four paths may be found by means of multipath search. Multipath information of each receive port may be acquired.

It is assumed that multipath information of receive port 1 is as follows: [1, 1, 0chip] and [1, 2, 1.5chip], and it is assumed that multipath information of receive port 2 is as follows: [2, 3, 0.25chip] and [2,4,3.0chip], where chip is a chip and represents a unit of a delay,

For example, [1, 1, 0chip] may represent a path that is assigned a path number 1 and corresponding to receive port 1, and a delay of the path is 0 chip. The other piece of multipath information of receive port 1 and the multipath information of receive port 2 are interpreted in a similar way as this piece of multipath information of receive port 1, and details are not described herein again.

In addition, a delay threshold may be preset to 1/2 chip. The base station may use the first path of receive port 1 as a reference path; in this case, the base station may determine that [1,1,0chip] and [2,3,0.25chip] are a group of matching paths.

Optionally, in another embodiment, in step 230, the base station may select j groups of matching paths from the i groups of matching paths according to energy on the i groups of matching paths, where j is a positive integer, and $1 \leq j \leq i$; and separately determine equivalent signals at the N transmit ports according to at least one uplink signal on the j groups of matching paths.

Optionally, in another embodiment, in step 230, the base station may sequence the i groups of matching paths in descending order according to the energy on the i groups of matching paths, and select the first j groups of matching paths from the i groups of matching paths that are sequenced. For example, the base station may use the sum of energy of M paths in each group of matching paths as energy on each group of matching paths.

In this case, by selecting one or more groups of matching paths that have higher path energy, signal quality of the selected one or more groups of matching paths can be improved, which in turn makes subsequent processing more reliable and less complex.

For example, assuming that five groups of matching paths are determined in step 220, the base station may sequence the five groups of matching paths in descending order of energy, and select, from the five groups of matching paths in the sequence, the first two groups of matching paths having higher energy for subsequent processing. As can be seen, this can greatly reduce complexity of subsequent processing. In addition to above, because higher energy of these two groups of matching paths indicates higher signal quality of these two groups of matching paths, and therefore reliability of subsequent processing can be enhanced.

Optionally, in another embodiment, in step 230, the base station may separately perform weighted processing on the uplink signals of the j groups of matching paths to separately determine j equivalent signals at each transmit port of the N transmit ports.

When matching weight values are used in an uplink direction and in a downlink direction, intensity of formed beams has reciprocity, that is to say, antenna gains have reciprocity. Consequently, signal intensity of all beams observed at a geographical location in the uplink direction and the downlink direction has a relationship of equivalence. This may only require reciprocity in beam intensity, and not in small-scale channel fading and path loss. A time division duplex (Time Division Duplex, TDD) system is good at meeting the reciprocity. A frequency division duplex (Frequency Division Duplex, FDD) system comes close to the capability of meeting the reciprocity; although a difference between operating frequencies s of uplink and downlink antennas may result in a specific amount of error, this error is substantially small. Therefore, in this embodiment of the present invention, the base station may determine an equivalent signal in the downlink direction by performing weighted processing on a signal in the uplink direction.

Optionally, in another embodiment, in step 230, for the $k^{th}$ group of matching paths among the j groups of matching paths, the base station may perform weighted processing on at least one uplink signals of the $k^{th}$ group of matching paths according to equation (1), so as to determine the $k^{th}$ equivalent signal $z_{nk}$ at the $n^{th}$ transmit port among the N transmit ports:

$$z_{n,k} = \sum_{m=1}^{M} W_{n,m} y_{k,m} \,, \quad n = 1, ..., N, \quad k = 1, ... j \qquad (1)$$

where $W_{n,m}$ may be an uplink AAS antenna weight value corresponding to the $n^{th}$ transmit port and the $m^{th}$ receive port, and $y_{k,m}$ may be an uplink signal of the $m^{th}$ path in the $k^{th}$ group of matching paths.

For example, when an uplink frequency and a downlink frequency are different, weight values required for forming a same beam shape in the uplink direction and the downlink direction are different. An uplink AAS antenna weight value may refer to a weight value required for forming a beam in the uplink direction. The base station may determine in advance a group of uplink AAS antenna weight values according to the uplink frequency, the downlink frequency, and downlink AAS antenna weight values, and stores the group of uplink AAS antenna weight values in the base station. Generally, uplink AAS antenna weight values match an uplink frequency. Specifically, one uplink frequency corresponds to one group of uplink AAS antenna weight values. Each value included in one group of uplink AAS antenna weight values corresponds to a transmit port and a receive port.

Optionally, in another embodiment, the foregoing uplink signals may be channel estimation factors.

Because the channel estimation factors have been stored inside a receiver of the base station, if a channel estimation factor of each path is used as a signal of each path, a real signal of each path does not need to be acquired, and processing complexity is thereby reduced. In addition, the base station is obtained after noise reduction is performed on the channel estimation factors in a filtering manner, and therefore processing is less susceptible to noise.

Optionally, in another embodiment, in step 240, the base station may perform energy estimation on an equivalent signal at each transmit port of the N transmit ports to determine a beam energy estimation value of each transmit port; perform noise reduction processing on the beam energy estimation value of each transmit port to determine a beam energy value of each transmit port; determine, according to the beam energy value of each transmit port, whether the UE is located in a beam overlapping area; when it is determined that the UE is located in a beam overlapping area, combine multiple beams corresponding to the beam overlapping area as the downlink transmit beam; or when it is determined that the UE is not located in a beam overlapping area, use a beam at a transmit port corresponding to a largest beam energy value as the downlink transmit beam.

In the prior art, in a multi-sector networking scenario, a UE moving across an overlapping area of two beams may have to switch between the two beams, which thereby affects key performance indicators (Key Performance Indicator, KPI) of the network. In this embodiment of the present invention, however, the base station may combine multiple beams corresponding to the overlapping area as a downlink transmit beam to send a signal to the UE crossing the overlapping area, and the UE does not need to switch between the beams, which can thereby improve network KPIs.

Optionally, in another embodiment, in step 240, the base station may separately perform energy estimation on j equivalent signals at each transmit port to separately determine j signal energy estimation values of each transmit port; and use the sum of the j signal energy estimation values of each transmit port as a beam energy estimation value of each transmit port.

Optionally, in another embodiment, in step 240, for the $r^{th}$ transmit port and $s^{th}$ transmit port that are spatially adjacent and among the N transmit ports, the base station may determine whether a difference between a beam energy value of the $r^{th}$ transmit port and a beam energy value of the $s^{th}$ transmit port is less than or equal to a preset beam energy threshold, so as to determine whether a UE is located in an overlapping area between a beam at the $r^{th}$ transmit port and a beam at the $s^{th}$ transmit port.

For example, with reference to equation (1), the base station may perform energy estimation on j equivalent signals at each transmit port according to equation (2) to determine a signal energy estimation value of each equivalent signal at each transmit port:

$$E_{nk} = \left| z_{nk} \right|^2, \quad n = 1, ..., N, \quad k = 1, ... j \qquad (2)$$

where $E_{nk}$ may be a signal energy estimation value of the $k^{th}$ equivalent signal at the $n^{th}$ transmit port.

In this way, the base station may determine j signal energy estimation values of each transmit port. A beam energy estimation value of each transmit port is determined according to the j signal energy estimation values of each transmit port. For example, the base station may determine a beam energy estimation value of each transmit port according to equation (3):

$$E_n = \sum_{k=1}^{i} |z_{nk}|^2, \qquad n = 1,...,N \qquad (3)$$

where $E_n$ may be a beam energy estimation value of the $n^{th}$ transmit port.

The base station may perform noise reduction processing on the beam energy estimation value of each transmit port to determine a beam energy value of each transmit port. For example, the base station may determine a beam energy value of each transmit port according to equation (4):

$$\overline{E}_n(t) = (1-\alpha)E_n(t) + \alpha\overline{E}_n(t-1), \qquad n = 1,...,N \qquad (4)$$

where t may represent time, $\overline{E}_n(t)$ may represent a beam energy value of the $n^{th}$ transmit port, and $\alpha$ may represent a filtering coefficient.

It may be seen that a beam energy value of the $n^{th}$ transmit port at a current moment may be a weighted average of a beam energy value of the transmit port at a previous moment and an unfiltered beam energy estimation value at the current moment.

After determining beam energy values of N transmit ports, the base station may determine, according to the beam energy values of the N transmit ports, whether a UE is located in a beam overlapping area. For example, in the scenarios shown in FIG. 1a to FIG. 1c, there are two transmit ports, and the base station may determine whether a difference between a beam energy value of the transmit port T1 and a beam energy value of the transmit port T2 is less than or equal to a preset beam energy threshold, so as to determine whether the UE is located in a beam overlapping area, namely, the area C shown in FIG. 1c. For example, the beam energy threshold may be 3 dB. If the difference between the beam energy value of the transmit port T1 and the beam energy value of the transmit port T2 is less than or equal to 3 dB, it may be determined that the UE is located in the area C. In this case, the base station may combine a beam at the transmit port T1 and a beam at the transmit port T2 as the downlink transmit beam. If the difference between the beam energy value of the transmit port T1 and the beam energy value of the transmit port T2 is greater than 3 dB, the base station may use a beam at a transmit port corresponding to a largest beam energy value as the downlink transmit beam. For example, if the beam energy value of the transmit port T1 is greater than the beam energy value of the transmit port T2, a beam at the transmit port T1 may be used as the downlink transmit beam.

This embodiment of the present invention may be applied to various AAS-capable systems, and in particular, is more applicable to a WCDMA system using an AAS. In an existing WCDMA system, selection of a downlink transmit beam is generally based on measurement of a common pilot measurement. Since a common pilot is sent in an entire cell and multiple sectors are formed in an AAS-capable WCDMA system due to beam splitting, selection of a downlink beam cannot be completed by using the existing method. Therefore, in this embodiment of the present invention, selection of a beam in a downlink direction is implemented by means of related measurement in an uplink direction, so that a downlink transmit beam can be effectively selected, thereby improving system performance and stability. Particularly, in a case in which a beam in the uplink direction and a beam in the downlink direction are asymmetric and antennas are spatially correlated, for example, in a case in which AAS beam splitting, together with sectorized transmission sectorized reception (Sectorized Transmission Sectorized Reception, STSR), is performed in the downlink direction to form six virtual sectors whereas no beam splitting is performed in the uplink direction, there is no related mechanism in the prior art to solve a problem associated with selecting a downlink beam. Therefore, in this embodiment of the present invention, an equivalent signal at a transmit port is determined according to a signal in the uplink direction, and a downlink transmit beam is determined according to energy of the equivalent signal at the transmit port, which can effectively implement selection of a downlink beam in a case in which uplink and downlink beams are asymmetric. Apparently, this embodiment of the present invention is also applicable to a case in which uplink and downlink beams are symmetric and antennas are spatially unrelated.

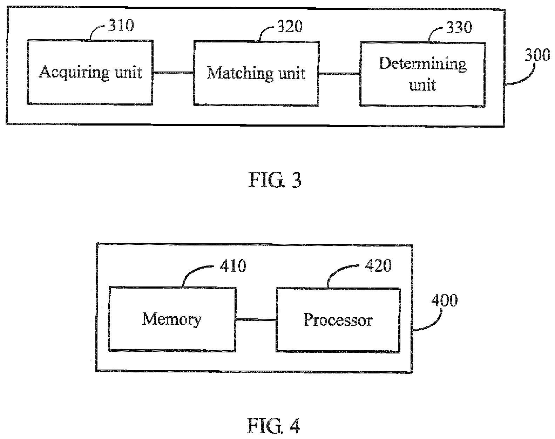

FIG. 3 is a schematic block diagram of a base station according to an embodiment of the present invention. The base station 300 in FIG. 3 includes an acquiring unit 310, a matching unit 320, and a determining unit 330.

The acquiring unit 310 separately acquires multipath information of each receive port among M receive ports of the base station, where the multipath information is used to indicate at least one path corresponding to each receive port, and M is a positive integer. The matching unit 320 performs multipath matching between the M receive ports according to the multipath information to determine i groups of matching paths, where i is a positive integer. The determining unit 330 separately determines at least one equivalent signals at N transmit ports of the base station according to uplink signals on the i groups of matching paths, where N is a positive integer. The determining unit 330 further determines, according to energy of the equivalent signals at the N transmit ports, a downlink transmit beam used for sending a signal to a UE.

In this embodiment of the present invention, equivalent signals at transmit ports are determined according to uplink signals of matching paths at receive ports, and a downlink transmit beam is determined according to energy of the equivalent signals at the transmit ports. By doing so, selection of a downlink transmit beam can be implemented in an AAS-capable system.

Optionally, in one embodiment, the multipath information may include a port number of a receive port at which each path of the at least one path is, a path number of each path, and a delay of each path.

Optionally, in another embodiment, the matching unit 320 may perform multipath matching between the M receive ports to determine i groups of matching paths, so that each group of matching paths among the i groups of matching paths includes M paths, a delay difference between the $h^{th}$ path and each path of the M paths except the $h^{th}$ path is less than or equal to a preset delay threshold, and the M paths are in a one-to-one correspondence with the M receive ports, where h is a positive integer, and $1 \leq h \leq M$.

Optionally, in another embodiment, the determining unit 330 selects j groups of matching paths from the i groups of matching paths according to energy on the i groups of matching paths, where j is a positive integer, and $1 \leq j \leq i$; and separately determines equivalent signals at the N transmit ports according to at least one uplink signal on the j groups of matching paths.

Optionally, in another embodiment, the determining unit 330 may sequence the i groups of matching paths in descending order according to the energy on the i groups of matching paths, and select the first j groups of matching paths from the i groups of matching paths that are sequenced.

Optionally, in another embodiment, the determining unit 330 may separately perform weighted processing on the uplink signals of the j groups of matching paths to separately determine j equivalent signals at each transmit port of the N transmit ports.

Optionally, in another embodiment, for the $k^{th}$ group of matching paths among the j groups of matching paths, the determining unit 330 may perform weighted processing on uplink signals of the $k^{th}$ group of matching paths according to the following equation (1), so as to determine the $k^{th}$ equivalent signal $z_{nk}$ at the $n^{th}$ transmit port of the N transmit ports.

Optionally, in another embodiment, the foregoing uplink signals may be channel estimation factors.

Optionally, in another embodiment, the determining unit 330 may perform energy estimation on an equivalent signal at each transmit port of the N transmit ports to determine a beam energy estimation value of each transmit port; perform noise reduction processing on the beam energy estimation value of each transmit port to determine a beam energy value of each transmit port; determine, according to the beam energy value of each transmit port, whether the UE is located in a beam overlapping area; and in a case in which it is determined that the user equipment is located in the beam overlapping area, combine multiple beams corresponding to the beam overlapping area as the downlink transmit beam; or in a case in which it is determined that the user equipment is not located in the beam overlapping area, use a beam at a transmit port corresponding to a largest beam energy value as the downlink transmit beam.

Optionally, in another embodiment, the determining unit 330 may separately perform energy estimation on j equivalent signals at each transmit port to separately determine j signal energy estimation values of each transmit port; and use the sum of the j signal energy estimation values of each transmit port as a beam energy estimation value of each transmit port.

Optionally, in another embodiment, for the $r^{th}$ transmit port and $s^{th}$ transmit port that are spatially adjacent and among the N transmit ports, the determining unit 330 may determine whether a difference between a beam energy value of the $r^{th}$ transmit port and a beam energy value of the $s^{th}$ transmit port is less than or equal to a preset beam energy threshold, so as to determine whether the UE is located in an overlapping area between a beam at the $r^{th}$ transmit port and a beam at the $s^{th}$ transmit port.

For operations and functions of each unit of the base station 300, refer to steps 210 to 240 of the foregoing method in FIG. 2. To avoid repetition, details are not described herein again.

FIG. 4 is a schematic block diagram of a base station according to an embodiment of the present invention. The base station 400 in FIG. 4 includes a memory 410 and a processor 420.

The processor 420 invokes code stored in the memory 410, to separately acquire multipath information of each receive port among M receive ports of the base station, where the multipath information is used to indicate at least one path corresponding to each receive port, and M is a positive integer; perform multipath matching between the M receive ports according to the multipath information to determine i groups of matching paths, where i is a positive integer; separately determine at least one equivalent signals at N transmit ports of the base station according to uplink signals on the i groups of matching paths, where N is a positive integer; and determine, according to energy of the equivalent signals at the N transmit ports, a downlink transmit beam used for sending a signal to a UE.

In this embodiment of the present invention, equivalent signals at transmit ports are determined according to uplink signals of matching paths at receive ports, and a downlink transmit beam is determined according to energy of the equivalent signals at the transmit ports. By doing so, selection of a downlink transmit beam can be implemented in an AAS-capable system.

Optionally, in one embodiment, the multipath information may include a port number of a receive port at which each path of the at least one path is, a path number of each path, and a delay of each path.

Optionally, in another embodiment, the processor 420 may perform multipath matching between the M receive ports to determine i groups of matching paths, so that each group of matching paths among the i groups of matching paths includes M paths, a delay difference between the $h^{th}$ path and each path of the M paths except the $h^{th}$ path is less than or equal to a preset delay threshold, and the M paths are in a one-to-one correspondence with the M receive ports, where h is a positive integer, and $1 \leq h \leq M$.

Optionally, in another embodiment, the processor 420 may select j groups of matching paths from the i groups of matching paths according to energy on the i groups of matching paths, where j is a positive integer, and $1 \leq j \leq i$; and separately determine equivalent signals at the N transmit ports according to uplink signals on the j groups of matching paths.

Optionally, in another embodiment, the processor 420 may sequence the i groups of matching paths in descending order according to the energy on the i groups of matching paths, and select the first j groups of matching paths from the i groups of matching paths that are sequenced.

Optionally, in another embodiment, the processor 420 may separately perform weighted processing on the uplink signals of the j groups of matching paths to separately determine j equivalent signals at each transmit port of the N transmit ports.

Optionally, in another embodiment, for the $k^{th}$ group of matching paths among the j groups of matching paths, the processor 420 may perform weighted processing on at least one uplink signals of the $k^{th}$ group of matching paths according to the following equation (1), so as to determine the $k^{th}$ equivalent signal $z_{nk}$ at the $n^{th}$ transmit port of the N transmit ports.

Optionally, in another embodiment, the foregoing uplink signals may be channel estimation factors.

Optionally, in another embodiment, the processor 420 may perform energy estimation on an equivalent signal at each transmit port of the N transmit ports to determine a beam energy estimation value of each transmit port; perform noise reduction processing on the beam energy estimation value of each transmit port to determine a beam energy value of each transmit port; determine, according to the beam energy value of each transmit port, whether the user equipment is located in a beam overlapping area; and in a case in which it is determined that the user equipment is located in the beam overlapping area, combine multiple beams corresponding to the beam overlapping area as the downlink transmit beam; or in a case in which it is determined that the user equipment is not located in the beam overlapping area, use a beam at a transmit port corresponding to a largest beam energy value as the downlink transmit beam.

Optionally, in another embodiment, the processor 420 may separately perform energy estimation on j equivalent signals at each transmit port to separately determine j signal energy estimation values of each transmit port; and use the sum of the j signal energy estimation values of each transmit port as a beam energy estimation value of each transmit port.

Optionally, in another embodiment, for the $r^{th}$ transmit port and $s^{th}$ transmit port that are spatially adjacent and among the N transmit ports, the processor 420 may determine whether a difference between a beam energy value of the $r^{th}$ transmit port and a beam energy value of the $s^{th}$ transmit port is less than or equal to a preset beam energy threshold, so as to determine whether the user equipment is located in an overlapping area between a beam at the $r^{th}$ transmit port and a beam at the $s^{th}$ transmit port.

For operations and functions of each unit of the base station 400, refer to steps 210 to 240 of the foregoing method in FIG. 2. To avoid repetition, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A beam selection method, comprising:

   separately acquiring (210) multipath information of each receive port of M receive ports of a base station, wherein the multipath information is used to indicate at least one path corresponding to each receive port, and M is a positive integer;

   performing (220) multipath matching between the M receive ports according to the multipath information to determine i groups of matching paths, wherein i is a positive integer; **characterized by**

   separately determining (230) at least one equivalent signal at N transmit ports of the base station according to at least one uplink signal on the i groups of matching paths,

   wherein N is a positive integer, comprising selecting j groups of matching paths from the i groups of matching paths according to energy on the i groups of matching paths, wherein j is a positive integer, and $1 \leq j \leq i$; and

   separately performing weighted processing on the uplink signals of the j groups of matching paths to separately determine j equivalent signals at each transmit port of the N transmit ports, which comprises:

   for the $k^{th}$ group of matching paths among the j groups of matching paths, performing weighted processing on at least one uplink signal of the $k^{th}$ group of matching paths according to the following equation, so as to determine the $k^{th}$ equivalent signal $z_{n,k}$ at the $n^{th}$ transmit port of the N transmit ports:

   $$z_{n,k} = \sum_{m=1}^{M} w_{n,m} y_{k,m} , \quad n = 1, \ldots, N \quad k = 1, \ldots, j$$

   wherein $W_{n,m}$ is an uplink active antenna system AAS antenna weight value corresponding to the $n^{th}$ transmit port and the $m^{th}$ receive port, and $y_{k,m}$ is an uplink signal on the $m^{th}$ path in the $k^{th}$ group of matching paths; and

   determining (240), according to energy of the equivalent signals at the N transmit ports, a downlink transmit beam used for sending a signal to a user equipment.

2. The method according to claim 1, wherein the multipath information comprises a port number of a receive port at which each path of the at least one path is, a path number of each path, and a delay of each path.

3. The method according to claim 2, wherein the performing multipath matching between the M receive ports according to the multipath information to determine i groups of matching paths comprises:

performing multipath matching between the M receive ports to determine the i groups of matching paths, so that each group of matching paths among the i groups of matching paths comprises M paths, a delay difference between the $h^{th}$ path and each path of the M paths except the $h^{th}$ path is less than or equal to a preset delay threshold, and the M paths are in a one-to-one correspondence with the M receive ports, wherein h is a positive integer, and $1 \leq h \leq M$.

4. The method according to any of the previous claims, wherein the selecting j groups of matching paths from the i groups of matching paths according to energy on the i groups of matching paths comprises:

sequencing the i groups of matching paths in descending order according to the energy on the i groups of matching paths; and
selecting the first j groups of matching paths from the i groups of matching paths that are sequenced.

5. The method according to any of the previous claims, wherein the determining, according to energy of the equivalent signals at the N transmit ports, a downlink transmit beam used for sending a signal to a user equipment comprises:

performing energy estimation on an equivalent signal at each transmit port of the N transmit ports to determine a beam energy estimation value of each transmit port;
performing noise reduction processing on the beam energy estimation value of each transmit port to determine a beam energy value of each transmit port;
determining, according to the beam energy value of each transmit port, whether the user equipment is located in a beam overlapping area; and
in a case in which it is determined that the user equipment is located in the beam overlapping area, combining multiple beams corresponding to the beam overlapping area as the downlink transmit beam; or
in a case in which it is determined that the user equipment is not located in the beam overlapping area, using a beam at a transmit port corresponding to a largest beam energy value as the downlink transmit beam.

6. The method according to claim 5, wherein the performing energy estimation on an equivalent signal at each transmit port of the N transmit ports to determine a beam energy estimation value of each transmit port comprises:

separately performing energy estimation on the j equivalent signals at each transmit port to separately determine j signal energy estimation values of each transmit port; and
using the sum of the j signal energy estimation values of each transmit port as the beam energy estimation value of each transmit port.

7. The method according to claim 5 or 6, wherein the determining, according to the beam energy value of each transmit port, whether the user equipment is located in a beam overlapping area comprises:

for the $r^{th}$ transmit port and $s^{th}$ transmit port that are spatially adjacent and among the N transmit ports, determining whether a difference between a beam energy value of the $r^{th}$ transmit port and a beam energy value of the $s^{th}$ transmit port is less than or equal to a preset beam energy threshold, so as to determine whether the user equipment is located in an overlapping area between a beam at the $r^{th}$ transmit port and a beam at the $s^{th}$ transmit port.

8. The method according to any one of claims 1 to 7, wherein the uplink signals is a channel estimation factor.

9. A base station (300), comprising:

an acquiring unit (310), configured to separately acquire multipath information of each receive port among M receive ports of the base station, wherein the multipath information is used to indicate at least one path corresponding to each receive port, and M is a positive integer;
a matching unit (320), configured to perform multipath matching between the M receive ports according to the multipath information to determine i groups of matching paths, wherein i is a positive integer; **characterized by**
a determining unit (330), configured to separately determine at least one equivalent signals at N transmit ports of the base station according to at least one uplink signal on the i groups of matching paths, wherein N is a positive integer, wherein the determining unit is specifically configured to select j groups of matching paths from the i groups of matching paths according to energy on the i groups of matching paths,
wherein j is a positive integer, and $1 \leq j \leq i$; and to separately perform weighted processing on the uplink signals of the j groups of matching paths to separately determine j equivalent signals at each transmit port of the N transmit ports, which comprises: for the $k^{th}$ group of matching paths among the j groups of matching paths, performing weighted processing on at least one uplink signal of the $k^{th}$ group of matching paths according to the following equation, so as to determine the $k^{th}$ equivalent signal $z_{n,k}$ at the $n^{th}$ transmit port of the N transmit ports:

$$z_{n,k} = \sum_{m=1}^{M} w_{n,m} y_{k,m}, \quad n = 1,\ldots,N \quad k = 1,\ldots,j$$

wherein $W_{n,m}$ is an uplink active antenna system AAS antenna weight value corresponding to the $n^{th}$ transmit port and the $m^{th}$ receive port, and $y_{k,m}$ is an uplink signal on the $m^{th}$ path in the $k^{th}$ group of matching paths; wherein the determining unit is further configured to determine, according to energy of the equivalent signals at the N transmit ports, a downlink transmit beam used for sending a signal to a user equipment.

10. The base station according to claim 9, wherein the multipath information comprises a port number of a receive port at which each path of the at least one path is, a path number of each path, and a delay of each path.

11. The base station according to claim 10, wherein the matching unit is specifically configured to perform multipath matching between the M receive ports to determine the i groups of matching paths, so that each group of matching paths among the i groups of matching paths comprises M paths, a delay difference between the $h^{th}$ path and each path of the M paths except the $h^{th}$ path is less than or equal to a preset delay threshold, and the M paths are in a one-to-one correspondence with the M receive ports, wherein h is a positive integer, and $1 \le h \le M$.

**Patentansprüche**

1. Strahlauswahlverfahren, umfassend:

   separates Erfassen (210) von Mehrweginformationen jedes Empfangsports von M Empfangsports einer Basisstation, wobei die Mehrweginformationen zum Angeben von mindestens einem Pfad, der jedem Empfangsport entspricht, verwendet werden und M eine positive ganze Zahl ist;
   Durchführen (220) einer Mehrwegabgleichung zwischen den M Empfangsports gemäß den Mehrweginformationen, um i Gruppen von abgeglichenen Pfaden zu bestimmen, wobei i eine positive ganze Zahl ist; durch Folgendes gekennzeichnet,
   separates Bestimmen (230) von mindestens einem äquivalenten Signal bei N Sendeports der Basisstation gemäß mindestens einem Aufwärtsstreckensignal auf den i Gruppen von abgeglichenen Pfaden, wobei N eine positive ganze Zahl ist, das Auswählen von j Gruppen von abgeglichenen Pfaden aus den i Gruppen von abgeglichenen Pfaden gemäß der Energie auf den i Gruppen von abgeglichenen Pfaden umfasst, wobei j eine positive ganze Zahl und $1 \le j \le i$ ist; und
   separates Durchführen einer gewichteten Verarbeitung an den Aufwärtsstreckensignalen der j Gruppen von abgeglichenen Pfaden, um j äquivalente Signale bei jedem Sendeport der N Sendeports separat zu bestimmen, was Folgendes umfasst:

   für die k-te Gruppe von abgeglichenen Pfaden unter den j Gruppen von abgeglichenen Pfaden, Durchführen einer gewichteten Verarbeitung an mindestens einem Aufwärtsstreckensignal der k-ten Gruppe von abgeglichenen Pfaden gemäß der folgenden Gleichung, um das k-te äquivalente Signal $z_{n,k}$ bei dem n-ten Sendeport der N Sendeports zu bestimmen:

$$z_{n,k} = \sum_{m=1}^{M} w_{n,m} y_{k,m}, \quad n = 1,\ldots,N \quad k = 1,\ldots,j$$

   wobei $W_{n,m}$ ein Aufwärtsstrecken-Aktivantennensystem-Antennengewichtswert bzw. Aufwärtsstrecken-AAS-Antennengewichtswert ist, der dem n-ten Sendeport und dem m-ten Empfangsport entspricht, und $y_{k,m}$ ein Aufwärtsstreckensignal auf dem m-ten Pfad in der k-ten Gruppe von abgeglichenen Pfaden ist; und Bestimmen (240) eines Abwärtsstreckensendestrahls, der zum Senden eines Signals zu einem Benutzergerät verwendet wird, gemäß der Energie des äquivalenten Signals bei den N Sendeports.

**2.** Verfahren nach Anspruch 1, wobei die Mehrweginformationen eine Portnummer eines Empfangsports, an dem sich jeder Pfad des mindestens einen Pfads befindet, eine Pfadnummer jedes Pfads und eine Verzögerung jedes Pfads umfassen.

**3.** Verfahren nach Anspruch 2, wobei das Durchführen einer Mehrwegabgleichung zwischen den M Empfangsports gemäß den Mehrweginformationen, um i Gruppen von abgeglichenen Pfaden zu bestimmen, Folgendes umfasst:

Durchführen einer Mehrwegabgleichung zwischen den M Empfangsports, um die i Gruppen von abgeglichenen Pfaden zu bestimmen, so dass jede Gruppe von abgeglichenen Pfaden unter den i Gruppen von abgeglichenen Pfaden M Pfade umfasst, ein Verzögerungsunterschied zwischen dem h-ten Pfad und jedem Pfad von den M Pfaden außer dem h-ten Pfad kleiner als oder gleich einer voreingestellten Verzögerungsschwelle ist und die M Pfade sich in einer Eins-zu-Eins-Korrespondenz mit den M Empfangsports befinden, wobei h eine positive ganze Zahl und $1 \leq h \leq M$ ist.

**4.** Verfahren nach einem der vorangegangenen Ansprüche, wobei das Auswählen von j Gruppen von abgeglichenen Pfaden aus den i Gruppen von abgeglichenen Pfaden gemäß der Energie auf den i Gruppen von abgeglichenen Pfaden Folgendes umfasst:

Sequenzieren der i Gruppen von abgeglichenen Pfaden in eine absteigende Reihenfolge gemäß der Energie auf den i Gruppen von abgeglichenen Pfaden und Auswählen der ersten j Gruppen von abgeglichenen Pfaden aus den i Gruppen von abgeglichenen Pfaden, die sequenziert sind.

**5.** Verfahren nach einem der vorangegangenen Ansprüche, wobei das Bestimmen eines Abwärtsstreckensendestrahls, der zum Senden eines Signals zu einem Benutzergerät verwendet wird, gemäß der Energie der äquivalenten Signale bei den N Sendeports Folgendes umfasst:

Durchführen einer Energieschätzung an einem äquivalenten Signal bei jedem Sendeport der N Sendeports, um einen Strahlenergieschätzwert jedes Sendeports zu bestimmen;
Durchführen einer Rauschminderungsverarbeitung am Strahlenergieschätzwert jedes Sendeports, um einen Strahlenergiewert jedes Sendeports zu bestimmen;
Bestimmen gemäß dem Strahlenergiewert jedes Sendeports, ob sich das Benutzergerät in einem Strahlüberschneidungsbereich befindet; und
in einem Fall, bei dem bestimmt wird, dass sich das Benutzergerät im Strahlüberschneidungsbereich befindet, Kombinieren mehrerer Strahlen, die dem Strahlüberschneidungsbereich entsprechen, als den Abwärtsstreckensendestrahl; oder
in einem Fall, bei dem bestimmt wird, dass sich das Benutzergerät nicht im Strahlüberschneidungsbereich befindet, Verwenden eines Strahls bei einem Sendeport, der einem größten Strahlenergiewert entspricht, als den Abwärtsstreckensendestrahl.

**6.** Verfahren nach Anspruch 5, wobei das Durchführen einer Energieschätzung an einem äquivalenten Signal bei jedem Sendeport der N Sendeports, um einen Strahlenergieschätzwert jedes Sendeports zu bestimmen, Folgendes umfasst:

separates Durchführen einer Energieschätzung an den j äquivalenten Signalen bei jedem Sendeport, um j Signalenergieschätzwerte jedes Sendeports separat zu bestimmen; und
Verwenden der Summe der j Signalenergieschätzwerte jedes Sendeports als den Strahlenergieschätzwert jedes Sendeports.

**7.** Verfahren nach Anspruch 5 oder 6, wobei das Bestimmen gemäß dem Strahlenergiewert jedes Sendeports, ob sich das Benutzergerät in einem Strahlüberschneidungsbereich befindet, Folgendes umfasst:

für den r-ten Sendeport und den s-ten Sendeport, die räumlich angrenzend sind und sich unter den N Sendeports befinden, Bestimmen, ob eine Differenz zwischen einem Strahlenergiewert des r-ten Sendeports und einem Strahlenergiewert des s-ten Sendeports kleiner als oder gleich einer voreingestellten Strahlenergieschwelle ist, um zu bestimmen, ob sich das Benutzergerät in einem Überschneidungsbereich zwischen einem Strahl beim r-ten Sendeport und einem Strahl beim s-ten Sendeport befindet.

**8.** Verfahren nach einem der Ansprüche 1 bis 7, wobei die Aufwärtsstreckensignale ein Kanalschätzungsfaktor sind.

9. Basisstation (300), umfassend:

eine Erfassungseinheit (310), die zum separaten Erfassen von Mehrweginformationen jedes Empfangsports unter M Empfangsports der Basisstation konfiguriert ist, wobei die Mehrweginformationen zum Angeben von mindestens einem Pfad, der jedem Empfangsport entspricht, verwendet werden und M eine positive ganze Zahl ist;

eine Abgleicheinheit (320), die zum Durchführen einer Mehrwegabgleichung zwischen den M Empfangsports gemäß den Mehrweginformationen konfiguriert ist, um i Gruppen von abgeglichenen Pfaden zu bestimmen, wobei i eine positive ganze Zahl ist; durch Folgendes gekennzeichnet,

eine Bestimmungseinheit (330), die zum separaten Bestimmen von mindestens einem äquivalenten Signal bei N Sendeports der Basisstation gemäß mindestens einem Aufwärtsstreckensignal auf den i Gruppen von abgeglichenen Pfaden konfiguriert ist, wobei N eine positive ganze Zahl ist, wobei die Bestimmungseinheit spezifisch zum Auswählen von j Gruppen von abgeglichenen Pfaden aus den i Gruppen von abgeglichenen Pfaden gemäß der Energie auf den i Gruppen von abgeglichenen Pfaden, wobei j eine positive ganze Zahl und $1 \leq j \leq i$ ist; und zum separaten Durchführen einer gewichteten Verarbeitung an den Aufwärtsstreckensignalen der j Gruppen von abgeglichenen Pfaden, um j äquivalente Signale bei jedem Sendeport der N Sendeports separat zu bestimmen, konfiguriert ist, was Folgendes umfasst:

für die k-te Gruppe von abgeglichenen Pfaden unter den j Gruppen von abgeglichenen Pfaden, Durchführen einer gewichteten Verarbeitung an mindestens einem Aufwärtsstreckensignal der k-ten Gruppe von abgeglichenen Pfaden gemäß der folgenden Gleichung, um das k-te äquivalente Signal $z_{n,k}$ bei dem n-ten Sendeport der N Sendeports zu bestimmen:

$$z_{n,k} = \sum_{m=1}^{M} w_{n,m} y_{k,m} , \mathrm{n} = 1,..., \mathrm{N} \quad \mathrm{k} = 1,..., \mathrm{j}$$

wobei $W_{n,m}$ ein Aufwärtsstrecken-Aktivantennensystem-Antennengewichtswert bzw. Aufwärtsstrecken-AAS-Antennengewichtswert ist, der dem n-ten Sendeport und dem m-ten Empfangsport entspricht, und $y_{k,m}$ ein Aufwärtsstreckensignal auf dem m-ten Pfad in der k-ten Gruppe von abgeglichenen Pfaden ist; wobei die Bestimmungseinheit ferner zum Bestimmen eines Abwärtsstreckensendestrahls, der zum Senden eines Signals zu einem Benutzergerät verwendet wird, gemäß der Energie der äquivalenten Signale bei den N Sendeports konfiguriert ist.

10. Basisstation nach Anspruch 9, wobei die Mehrweginformationen eine Portnummer eines Empfangsports, an dem sich jeder Pfad des mindestens einen Pfads befindet, eine Pfadnummer jedes Pfads und eine Verzögerung jedes Pfads umfassen.

11. Basisstation nach Anspruch 10, wobei die Abgleicheinheit spezifisch zum Durchführen einer Mehrwegabgleichung zwischen den M Empfangsports konfiguriert ist, um die i Gruppen von abgeglichenen Pfaden zu bestimmen, so dass jede Gruppe von abgeglichenen Pfaden unter den i Gruppen von abgeglichenen Pfaden M Pfade umfasst, ein Verzögerungsunterschied zwischen dem h-ten Pfad und jedem Pfad der M Pfade außer dem h-ten Pfad kleiner als oder gleich einer voreingestellten Verzögerungsschwelle ist und sich die M Pfade in einer Eins-zu-Eins-Korrespondenz mit den M Empfangsports befinden, wobei h eine positive ganze Zahl und $1 \leq h \leq M$ ist.

## Revendications

1. Procédé de sélection de faisceau, comprenant :

l'acquisition séparée (210) d'informations de trajets multiples de chaque port de réception de M ports de réception d'une station de base, dans lequel les informations de trajets multiples sont utilisées pour indiquer au moins un trajet correspondant à chaque port de réception, et M est un nombre entier positif ;

l'exécution (220) d'une concordance de trajets multiples entre les M ports de réception conformément aux informations de trajets multiples pour déterminer i groupes de trajets concordants, où i est un nombre entier positif ; **caractérisé par** la détermination séparée (230) d'au moins un signal équivalent au niveau de N ports de transmission de la station de base conformément à au moins un signal de liaison montante sur les i groupes de trajets concordants, où N est un nombre entier positif, comprenant la sélection de j groupes de trajets concordants parmi les i groupes de trajets concordants conformément à l'énergie sur les i groupes de trajets concordants, dans lequel j est un nombre entier positif, et $1 \leq j \leq i$ ; et

l'exécution séparée d'un traitement pondéré sur les signaux de liaison montante des j groupes de trajets concordants pour déterminer séparément j signaux équivalents au niveau de chaque port de transmission des N ports de transmission, lequel comprend

pour le $k^{\text{ième}}$ groupe de trajets concordants parmi les j groupes de trajets concordants, l'exécution d'un traitement pondéré sur au moins un signal de liaison montante du $k^{\text{ième}}$ groupe de trajets concordants conformément à l'équation suivante, de manière à déterminer le $k^{\text{ième}}$ signal équivalent $z_{n,k}$ au niveau du $n^{\text{ième}}$ port de transmission des N ports de transmission :

$$z_{n,k} = \sum_{m=1}^{M} w_{n,m} y_{k,m} \, , \quad n = 1, \ldots, N \quad k = 1, \ldots, j$$

où $W_{n,m}$ est une valeur de pondération d'antenne de système d'antenne actif AAS de liaison montante correspondant au $n^{\text{ième}}$ port de transmission et au $m^{\text{ième}}$ port de réception, et $y_{k,m}$ est un signal de liaison montante sur le $m^{\text{ième}}$ trajet dans le $k^{\text{ième}}$ groupe de trajets concordants ; et

la détermination (240), conformément à l'énergie des signaux équivalents au niveau des N ports de transmission, d'un faisceau de transmission de liaison descendante utilisé pour envoyer un signal à un équipement utilisateur.

2. Procédé selon la revendication 1, dans lequel les informations de trajets multiples comprennent un numéro de port d'un port de réception auquel chaque trajet de l'au moins un trajet se trouve, un numéro de trajet de chaque trajet, et un retard de chaque trajet.

3. Procédé selon la revendication 2, dans lequel l'exécution d'une concordance de trajets multiples entre les M ports de réception conformément aux informations de trajets multiples pour déterminer i groupes de trajets concordants comprend :

l'exécution d'une concordance de trajets multiples entre les M ports de réception pour déterminer les i groupes de trajets concordants, de telle sorte que chaque groupe de trajets concordants parmi les i groupes de trajets concordants comprenne M trajets, une différence de retard entre le $h^{\text{ième}}$ trajet et chaque trajet des M trajets sauf le $h^{\text{ième}}$ trajet soit inférieure ou égale à un seuil de retard prédéfini, et les M trajets soient en correspondance biunivoque avec les M ports de réception, où h est un nombre entier positif, et $1 \leq h \leq M$.

4. Procédé selon l'une quelconque des revendications précédentes, dans lequel la sélection de j groupes de trajets concordants parmi les i groupes de trajets concordants conformément à l'énergie sur les i groupes de trajets concordants comprend :

le séquencement des i groupes de trajets concordants en ordre décroissant conformément à l'énergie sur les i groupes de trajets concordants ; et

la sélection des j premiers groupes de trajets concordants parmi les i groupes de trajets concordants qui sont séquencés.

5. Procédé selon l'une quelconque des revendications précédentes, dans lequel la détermination, conformément à l'énergie des signaux équivalents au niveau des N ports de transmission, d'un faisceau de transmission de liaison descendante utilisé pour envoyer un signal à un équipement utilisateur comprend :

l'exécution d'une estimation d'énergie sur un signal équivalent au niveau de chaque port de transmission des N ports de transmission pour déterminer une valeur d'estimation d'énergie de faisceau de chaque port de transmission ;

l'exécution d'un traitement de réduction de bruit sur la valeur d'estimation d'énergie de faisceau de chaque port de transmission pour déterminer une valeur d'énergie de faisceau de chaque port de transmission ;

la détermination, conformément à la valeur d'énergie de faisceau de chaque port de transmission, que l'équipement utilisateur est situé ou non dans une zone de chevauchement de faisceaux ; et

dans le cas où il est déterminé que l'équipement utilisateur est situé dans la zone de chevauchement de faisceaux, la combinaison de multiples faisceaux correspondant à la zone de chevauchement de faisceaux comme faisceau de transmission de liaison descendante ; ou
dans le cas où il est déterminé que l'équipement utilisateur n'est pas situé dans la zone de chevauchement de faisceaux, l'utilisation d'un faisceau au niveau d'un port de transmission correspondant à une valeur d'énergie de faisceau la plus grande comme faisceau de transmission de liaison descendante.

6. Procédé selon la revendication 5, dans lequel l'exécution de l'estimation d'énergie sur un signal équivalent au niveau de chaque port de transmission des N ports de transmission pour déterminer une valeur d'estimation d'énergie de faisceau de chaque port de transmission comprend :

   l'exécution séparée d'une estimation d'énergie sur les j signaux équivalents au niveau de chaque port de transmission pour déterminer séparément j valeurs d'estimation d'énergie de signal de chaque port de transmission ; et
   l'utilisation de la somme des j valeurs d'estimation d'énergie de signal de chaque port de transmission comme valeur d'estimation d'énergie de faisceau de chaque port de transmission.

7. Procédé selon la revendication 5 ou 6, dans lequel la détermination, conformément à la valeur d'énergie de faisceau de chaque port de transmission, que l'équipement utilisateur est situé ou non dans une zone de chevauchement de faisceaux comprend :

   pour le $r^{\text{ième}}$ port de transmission et le $s^{\text{ième}}$ port de transmission qui sont spatialement adjacents et parmi les N ports de transmission, la détermination qu'une différence entre une valeur d'énergie de faisceau du $r^{\text{ième}}$ port de transmission et une valeur d'énergie de faisceau du $s^{\text{ième}}$ port de transmission est ou non inférieure ou égale à un seuil d'énergie de faisceau prédéfini, de manière à déterminer que l'équipement utilisateur est situé ou non dans une zone de chevauchement entre un faisceau au niveau du $r^{\text{ième}}$ port de transmission et un faisceau au niveau du $s^{\text{ième}}$ port de transmission.

8. Procédé selon l'une quelconque des revendications 1 à 7, dans lequel le signal de liaison montante est un facteur d'estimation de canal.

9. Station de base (300), comprenant :

   une unité d'acquisition (310), configurée pour acquérir séparément des informations de trajets multiples de chaque port de réception parmi M ports de réception de la station de base, dans lequel les informations de trajets multiples sont utilisées pour indiquer au moins un trajet correspondant à chaque port de réception, et M est un nombre entier positif ;
   une unité de concordance (320), configurée pour exécuter une concordance de trajets multiples entre les M ports de réception conformément aux informations de trajets multiples pour déterminer i groupes de trajets concordants, où i est un nombre entier positif ; **caractérisée par**
   une unité de détermination (330), configurée pour déterminer séparément au moins un signal équivalent au niveau de N ports de transmission de la station de base conformément à au moins un signal de liaison montante sur les i groupes de trajets concordants, où N est un nombre entier positif, dans lequel l'unité de détermination est configurée spécifiquement pour sélectionner j groupes de trajets concordants parmi les i groupes de trajets concordants conformément à l'énergie sur les i groupes de trajets concordants, dans laquelle j est un nombre entier positif, et $1 \leq j \leq i$ ; et
   exécuter séparément un traitement pondéré sur les signaux de liaison montante des j groupes de trajets concordants pour déterminer séparément j signaux équivalents au niveau de chaque port de transmission des N ports de transmission, lequel comprend

      pour le $k^{\text{ième}}$ groupe de trajets concordants parmi les j groupes de trajets concordants, l'exécution d'un traitement pondéré sur au moins un signal de liaison montante du $k^{\text{ième}}$ groupe de trajets concordants conformément à l'équation suivante, de manière à déterminer le $k^{\text{ième}}$ signal équivalent $z_{n,k}$ au niveau du $n^{\text{ième}}$ port de transmission des N ports de transmission :

$$z_{n,k} = \sum_{m=1}^{M} w_{n,m} y_{k,m} , \quad n = 1, \ldots, N \quad k = 1, \ldots, j$$

où $W_{n,m}$ est une valeur de pondération d'antenne de système d'antenne actif AAS de liaison montante

correspondant au n$^{\text{ième}}$ port de transmission et au m$^{\text{ième}}$ port de réception, et $y_{k,m}$ est un signal de liaison montante sur le m$^{\text{ième}}$ trajet dans le k$^{\text{ième}}$ groupe de trajets concordants ; dans laquelle l'unité de détermination est configurée en outre pour déterminer, conformément à l'énergie des signaux équivalents au niveau des N ports de transmission, un faisceau de transmission de liaison descendante utilisé pour envoyer un signal à un équipement utilisateur.

10. Station de base selon la revendication 9, dans laquelle les informations de trajets multiples comprennent un numéro de port d'un port de réception auquel chaque trajet de l'au moins un trajet se trouve, un numéro de trajet de chaque trajet, et un retard de chaque trajet.

11. Station de base selon la revendication 10, dans laquelle l'unité de concordance est configurée spécifiquement pour exécuter une concordance de trajets multiples entre les M ports de réception pour déterminer les i groupes de trajets concordants, de telle sorte que chaque groupe de trajets concordants parmi les i groupes de trajets concordants comprenne M trajets, une différence de retard entre le h$^{\text{ième}}$ trajet et chaque trajet des M trajets sauf le h$^{\text{ième}}$ trajet soit inférieure ou égale à un seuil de retard prédéfini, et les M trajets soient en correspondance biunivoque avec les M ports de réception, où h est un nombre entier positif, et $1 \leq h \leq M$.

Antenna Antenna Antenna Antenna
110a     110b     110c     110d

T1                                  T2

FIG. 1a

Antenna Antenna Antenna Antenna
110a     110b     110c     110d

R1       R2       R3       R4

FIG. 1b

Area D

Area A

Area B

Area C

FIG. 1c

| Separately acquire multipath information of each receive port among M receive ports of a base station | 210 |

| Perform multipath matching between the M receive ports according to the multipath information to determine i groups of matching paths | 220 |

| Separately determine equivalent signals at N transmit ports of the base station according to uplink signals on the i groups of matching paths | 230 |

| Determine, according to energy of the equivalent signals at the N transmit ports, a downlink transmit beam | 240 |

FIG. 2

EP 2 938 008 B1

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1492252 A1
- WO 03096710 A2